# EUROPÄISCHE PATENTANMELDUNG

(11) **EP 4 415 191 A1**
(43) Veröffentlichungstag der Anmeldung: **14.08.2024**
(21) Anmeldenummer: 23156096.2
(22) Anmeldetag: 10.02.2023
(51) Int. Cl.: H02B 1/21, H02G 3/38, H02G 5/04

(54) **DECKENSTROMSCHIENE**

(71) Anmelder: Ansorg GmbH, 45473 Mülheim an der Ruhr (DE)
(72) Erfinder: Damm, Björn, 40476 Düsseldorf (DE)
(74) Vertreter: Latscha Schöllhorn Partner AG

(57) **Zusammenfassung**

Eine Deckenstromschiene (1) insbesondere zur Energieversorgung von an einer Raumdecke montierten Leuchten umfasst einen längsförmigen Profilkörper (2), sechs entlang der Längsachse des Profilkörpers (2) verlaufende erste Stromleiter (31) und vier entlang der Längsachse des Profilkörpers (2) verlaufende zweite Stromleiter (32) Der längsförmigen Profilkörper (2) weist eine Längsachse, eine Oberseite (21), eine der Oberseite (21) gegenüberliegende Unterseite (22), eine erste Querseite (23) und eine der ersten Querseite (23) gegenüberliegende zweite Querseite (24) auf. Die Oberseite (21), die Unterseite (22), die erste Querseite (23) und die zweite Querseite (24) verlaufen entlang der Längsachse. Der Profilkörper (2) weist eine an der Oberseite (21) ausgebildete Deckenmontagestruktur (211) und einen ersten Stromabgreifraum (25) auf. Die sechs ersten Stromleiter (31) sind im ersten Stromabgreifraum (25) angeordnet. Die Oberseite (21), die erste Querseite (23) oder die zweite Querseite (24) des Profilkörpers (2) ist mit einer ersten Öffnung (221) ausgestattet ist, durch welche der erste Stromabgreifraum (25) zugänglich ist. Der Profilkörper (2) weist einen zweiten Stromabgreifraum (26) auf. Die vier zweiten Stromleiter (32) sind im zweiten Stromabgreifraum (26) des Profilkörpers (2) angeordnet. Die Unterseite (22), die erste Querseite (23) oder die zweite Querseite (24) des Profilkörpers (2) ist mit einer zweiten Öffnung (241) ausgestattet ist, durch welche der zweite Stromabgreifraum (26) zugänglich.

## Beschreibung

### Technisches Gebiet

Die Erfindung betrifft eine Deckenstromschiene gemäss dem Oberbegriff des unabhängigen Anspruchs 1. Solche Deckenstromschienen umfassen einen längsförmigen Profilkörper mit einer Längsachse, eine Oberseite, eine der Oberseite gegenüberliegenden Unterseite, eine erste Querseite und eine der ersten Querseite gegenüberliegende zweite Querseite, wobei die Oberseite, die Unterseite, die erste Querseite und die zweite Querseite entlang der Längsachse verlaufen. Weiter beinhalten solche Deckenstromschienen typischerweise sechs entlang der Längsachse des Profilkörpers verlaufende erste Stromleiter, wobei der Profilkörper eine an der Oberseite ausgebildete Deckenmontagestruktur und einen ersten Stromabgreifraum aufweist, wobei die sechs ersten Stromleiter im ersten Stromabgreifraum angeordnet sind und wobei die Oberseite, die erste Querseite oder die zweite Querseite des Profilkörpers mit einer ersten Öffnung ausgestattet ist, durch welche der erste Stromabgreifraum zugänglich ist. Solche Deckenstromschienen können insbesondere zur Energiebeziehungsweise Stromversorgung von an einer Raumdecke montierten Leuchten oder ähnlichen Stromverbrauchern eingesetzt werden.

### Stand der Technik

Zur Versorgung von an Raumdecken montierten Leuchten und ähnlichen Stromverbrauchern wie Bildschirmen, Lautsprechern und dergleichen werden insbesondere in Verkaufsgeschäften, Ausstellungsräumen oder auf Messen häufig Stromschienen eingesetzt, die an der Raumdecke montiert sind. Solche als Deckenstromschienen bezeichnete Einrichtungen ermöglichen typischerweise ein flexibles Abgreifen von Strom entlang der ganzen Schiene. Häufig sind Deckenstromschienen robust genug ausgebildet, um Leuchten beziehungsweise andere Stromverbraucher zusätzlich zum Stromversorgen auch tragen zu können.

Üblicherweise bestehen Deckenstromschienen dieser Art aus einem längsförmigen Profilkörper, der mit einer Deckenmontagestruktur und Stromleitern ausgestattet ist. Der Profilkörper kann als vierkantrohrartigen Profil aus einem beliebigen geeigneten Material wie Kunststoff oder Aluminium geformt sein. Aus Sicherheitsgründen weist er meist einen typischerweise vertikal von unten her zugänglichen Innenraum auf, in dem die Stromleiter angeordnet sind. Die Stromleiter verlaufen als Kabel oder Strombahnen entlang des Profilkörpers und sind üblicherweise zu diesem hin isoliert gehalten.

Häufig sind Deckenstromschienen zur Versorgung mit Netzstrom ausgebildet. Beispielsweise sind viele Systeme für Spannungen von etwa 220 Volt ausgelegt. Dabei sind die Stromleiter zum dreiphasigen Abgriff angeordnet, wozu sechs Stromleiter paarweise vorgesehen sind.

Viele moderne an Raumdecken montierte Stromverbraucher benötigen aber nicht Strom mit einer Spannung im Bereich von Netzstrom, sondern sind für Niedrigspannung von üblicherweise weniger als 60 Volt ausgelegt. Beispielsweise können solche Stromverbraucher Kameras, Notlichteinheiten, Bildschirme, LED-Beleuchtungen oder ähnliches sein. Zur Versorgung solcher Stromverbraucher muss typischerweise eine separate zweiphasige Stromzufuhr an die Decke gelegt werden. Dies kann aufwendig und umständlich zu bewirtschaften sein. Auch aus ästhetischen Gründen kann eine solche Mehrfachverkabelung an Raumdecken unerwünscht sein.

Der vorliegenden Erfindung liegt daher die Aufgabe zu Grunde, eine verbesserte Situation in Bezug auf unterschiedliche an Raumdecken montierten Stromverbrauchern zu schaffen.

### Darstellung der Erfindung

Die Aufgabe wird erfindungsgemäss durch eine Deckenstromschiene gelöst, wie sie im unabhängigen Anspruch 1 definiert ist, und durch eine Nachrüstschiene, wie sie im unabhängigen Anspruch 10 definiert ist. Vorteilhafte Ausführungsvarianten der Erfindung ergeben sich aus den abhängigen Ansprüchen.

In einem Aspekt ist die Erfindung eine Deckenstromschiene. Die Deckenstromschiene umfasst einen längsförmigen Profilkörper mit einer Längsachse, einer Oberseite, einer der Oberseite gegenüberliegenden Unterseite, einer ersten Querseite und einer der ersten Querseite gegenüberliegende zweite Querseite, wobei die Oberseite, die Unterseite, die erste Querseite und die zweite Querseite entlang der Längsachse verlaufen. Die Deckenstromschiene umfasst weiter sechs im Wesentlichen entlang der Längsachse des Profilkörpers verlaufende erste Stromleiter und vier ebenfalls im Wesentlichen entlang der Längsachse des Profilkörpers verlaufende zweite Stromleiter.

Der Profilkörper weist eine an der Oberseite ausgebildete Deckenmontagestruktur und einen ersten Stromabgreifraum auf. Die sechs ersten Stromleiter sind im ersten Stromabgreifraum angeordnet. Die Oberseite, die erste Querseite oder die zweite Querseite des Profilkörpers ist mit einer ersten Öffnung ausgestattet, durch welche der erste Stromabgreifraum zugänglich ist.

Der Profilkörper weist ferner einen zweiten Stromabgreifraum auf. Die vier zweiten Stromleiter sind im zweiten Stromabgreifraum des Profilkörpers angeordnet. Die Unterseite, die erste Querseite oder die zweite Querseite des Profilkörpers ist mit einer zweiten Öffnung ausgestattet, durch welche der zweite Stromabgreifraum zugänglich ist.

Die erfindungsgemässe Deckenstromschiene ermöglicht es, mit dem ersten Stromabgreifraum einen ersten Stromabgriff beziehungsweise eine erste Strombuchse für einen passenden Adapter bereitzustellen, der für Netzspannung mit drei Phasen ausgebildet ist. Zum Beispiel kann dieser erste Stromabgriff für eine Netzspannung von beispielsweise etwa 220 Volt ausgelegt sein. Gleichzeitig kann mit dem zweiten Stromabgreifraum ein zweiter Stromabgriff beziehungsweise eine zweite Strombuchse für einen passenden Adapter bereitgestellt werden, der mit zwei Phasen für eine niedrigere Spannung von beispielsweise etwa 60 Volt oder weniger ausgelegt ist.

So kann die erfindungsgemässe Deckenstromschiene als Hybrid-Stromschiene ausgestaltet sein, mit der die Energieversorgung von an einer Raumdecke montierten unterschiedlichen Leuchten und auch anderen Stromverbrauchern effizient erfolgen kann. Durch die integrierte Ausgestaltung kann zudem eine ästhetisch ansprechende ruhige Gestaltung erreicht werden. Zudem kann ein vergleichsweise hoher Aufwand vermieden werden, wie er bei der mehrfachen Verstromung von Raumdecken typischerweise vorliegt.

Vorzugsweise sind die erste Öffnung und die zweite Öffnung an verschiedenen beziehungsweise unterschiedlichen der Unterseite, der ersten Querseite und der zweiten Querseite des Profilkörpers ausgebildet. So kann erreicht werden, dass der Zugriff auf die passende Spannung einfach und klar erfolgt. Eine unbeabsichtigte Fehlbenutzung kann so vermieden werden.

Vorzugsweise sind die Unterseite des Profilkörpers mit der ersten Öffnung und eine der beiden ersten und zweiten Querseiten des Profilkörpers mit der zweiten Öffnung ausgestattet. Eine solche Ausgestaltung der Deckenstromschiene ermöglicht es, die Netzstromversorgung in herkömmlicher Weise über die Unterseite bereitzustellen und die Niedrigspannungsstromversorgung über eine der beiden Querseiten. So kann erreicht werden, dass der Zugriff auf die passende Spannung besonders einfach und klar erfolgt.

Vorzugsweise sind die sechs ersten Stromleiter in zwei Paaren jeweils an einander gegenüberliegenden Innenwandungen des ersten Stromabgreifraums des Profilkörpers angeordnet. Dies ermöglicht eine effiziente dreiphasige Stromversorgung, wie dies bei Netzstrom üblicherweise gewünscht ist.

Vorzugsweise sind die vier zweiten Stromleiter in zwei Paaren jeweils an einander gegenüberliegenden Innenwandungen des zweiten Stromabgreifraums des Profilkörpers angeordnet. Dies ermöglicht eine effiziente zweiphasige Stromversorgung, wie dies bei Niedrigspannungsstrom üblicherweise gewünscht ist.

Vorzugsweise sind die erste Öffnung und die zweite Öffnung jeweils schlitzartig geformt und erstrecken sich im Wesentlichen über die ganze Länge des Profilkörpers. Solche schlitzartigen Öffnungen ermöglichen einen flexiblen Stromabgriff an einer beliebigen Position entlang der Deckenstromschiene.

Vorzugsweise ist die Deckenmontagestruktur als Kontur an der Oberseite des Profilkörpers ausgebildet. Eine solche Ausgestaltung der Deckenmontagestruktur ermöglicht eine äusserst stabile und integrierte Deckenmontage.

Vorzugsweise sind die ersten und zweiten Stromleiter über eine Isolationsstruktur stromtechnisch vom Profilkörper getrennt. Unter dem Begriff «stromtechnisch getrennt» wird im Zusammenhang mit zwei Bauteilen beziehungsweise Komponenten wie beispielsweise den Stromleitern und dem Profilkörper verstanden, dass im Wesentlichen kein Strom zwischen den Bauteilen beziehungsweise Komponenten fliessen kann. Die stromtechnisch getrennten Bauteile beziehungsweise Komponenten sind also voneinander elektrisch isoliert.

Die Isolationsstruktur kann bandförmig ausgebildet sein und entlang des Profilkörpers verlaufen. Beispielswiese kann die Isolationsstruktur Isolationsbahnen aufweisen, die an den Innenwandungen der ersten und zweiten Stromabgreifräumen angebracht sind und in die benachbarte Stromleiter gebettet sind. Eine solche Isolationsstruktur ermöglicht es, das Material des Profilkörpers unabhängig von seinen Isolationseigenschaften zu wählen. Beispielsweise kann der Profilkörper aus Metall insbesondere als Aluminium- oder ähnliches Strangpressprofil hergestellt sein.

Vorzugsweise umfasst die Deckenstromschiene eine Nachrüststromschiene wie sie nachfolgend beschrieben ist. Dabei umfasst der Profilkörper ein Basisprofilkörperteil und das Ergänzungsprofilkörperteil der Nachrüstschiene. Das Basisprofilkörperteil weist eine der Längsachse entlang verlaufende und mit einer Deckenmontagestruktur ausgestattete Oberseite und den ersten Stromabgreifraum auf. Die Verbindungsstruktur des Ergänzungsprofilkörperteils der Nachrüstschiene ist mit der Deckenmontagestruktur des Basisprofilkörperteils verbunden, sodass der Stromabgreifraum des Ergänzungsprofilkörperteils der Nachrüstschiene den zweiten Stromabgreifraum des Profilkörpers, die Oberseite des Ergänzungsprofilkörperteils der Nachrüstschiene die Oberseite des Profilkörpers, die Unterseite des Basisprofilkörperteils die Unterseite des Profilkörpers, die Öffnung des Ergänzungsprofilkörperteils der Nachrüstschiene die zweite Öffnung des Profilkörpers und die vier Stromleiter der Nachrüstschiene die vier zweiten Stromleiter bilden.

In einem anderen Aspekt ist die Erfindung eine Nachrüststromschiene für eine Deckenstromschiene. Die Nachrüstschiene weist ein längsförmiges Ergänzungsprofilkörperteil und vier entlang der Längsachse des Ergänzungsprofilkörperteils verlaufende Stromleiter auf. Das Ergänzungsprofilkörperteil umfasst ein mit einer Längsachse, einer Oberseite, einer der Oberseite gegenüberliegenden Unterseite, einer ersten Querseite und einer der ersten Querseite gegenüberliegende zweiten Querseite ausgestattetes längsförmiges Ergänzungsprofilkörperteil. Die Oberseite, die Unterseite, die erste Querseite und die zweite Querseite verlaufen entlang der Längsachse. Das Ergänzungsprofilkörperteil weist eine an der Oberseite ausgebildete Deckenmontagestruktur und eine an der Unterseite ausgebildete Verbindungsstruktur auf. Die Deckenmontagestruktur und die Verbindungsstruktur sind komplementär zueinander ausgestaltet. Der Begriff «komplementär» bezieht sich in diesem Zusammenhang darauf, dass die Strukturen passend zueinander ausgebildet sind. Insbesondere können komplementäre Strukturen beispielsweise formschlüssig miteinander verbunden werden.

Das Ergänzungsprofilkörperteil weist einen Stromabgreifraum auf, wobei die vier Stromleiter im Stromabgreifraum des Ergänzungsprofilkörperteils angeordnet sind. Die erste Querseite oder die zweite Querseite des Ergänzungsprofilkörperteils mit einer Öffnung ausgestattet ist, durch welche der Stromabgreifraum zugänglich ist.

Die erfindungsgemässe Nachrüststromschiene ermöglicht es auf vergleichsweise einfache und effiziente Weise bestehende Deckenstromschiene nachzurüsten. Dabei kann eine quasi als Einheit geformte hybride Deckenstromschiene aus der bestehenden Stromschiene und der Nachrüstschiene geformt werden. So können die im Zusammenhang mit der erfindungsgemässen Deckenstromschiene erreichten Vorteile und Effekte unter Nutzung bestehender Komponenten erreicht werden. Insbesondere können bestehende für Netzstrom ausgelegte Deckenstromschienen mit einer Niedervolt-Stromversorgung aufgerüstet werden.

In der Nachrüststromschiene sind die vier Stromleiter vorzugsweise in zwei Paaren jeweils an einander gegenüberliegenden Innenwandungen des Stromabgreifraums des Ergänzungsprofilkörperteils angeordnet. So kann auf effiziente Weise ein zweiphasiger Niedervolt-Stromabgriff bereitgestellt werden.

Die Öffnung des Ergänzungsprofilkörperteils ist vorzugsweise schlitzartig geformt und erstreckt sich vorzugsweise im Wesentlichen über die ganze Länge des Ergänzungsprofilkörperteils.

In der Nachrüststromschiene ist die Deckenmontagestruktur des Ergänzungsprofilkörperteils vorzugsweise als Kontur an der Oberseite ausgebildet.

Vorzugsweise sind in der Nachrüststromschiene die Stromleiter über eine Isolationsstruktur stromtechnisch vom Ergänzungsprofilkörperteil getrennt.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere werden im Folgenden die erfindungsgemässe Deckenstromschiene und die erfindungsgemässe Nachrüststromschiene unter Bezugnahme auf die beigefügten Zeichnungen anhand von Ausführungsbeispielen detaillierter beschrieben. Es zeigen:
- Fig. 1: eine Frontalansicht an ein erstes Ausführungsbeispiel einer erfindungsgemässen Deckenstromschiene;
- Fig. 2: eine perspektivische Teilansicht der Deckenstromschiene von Fig. 1;
- Fig. 3: eine Frontalansicht an ein zweites Ausführungsbeispiel einer erfindungsgemässen Deckenstromschiene mit einem Ausführungsbeispiel einer erfindungsgemässen Nachrüststromschiene; und
- Fig. 4: eine perspektivische Teilansicht der Deckenstromschiene von Fig. 3.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

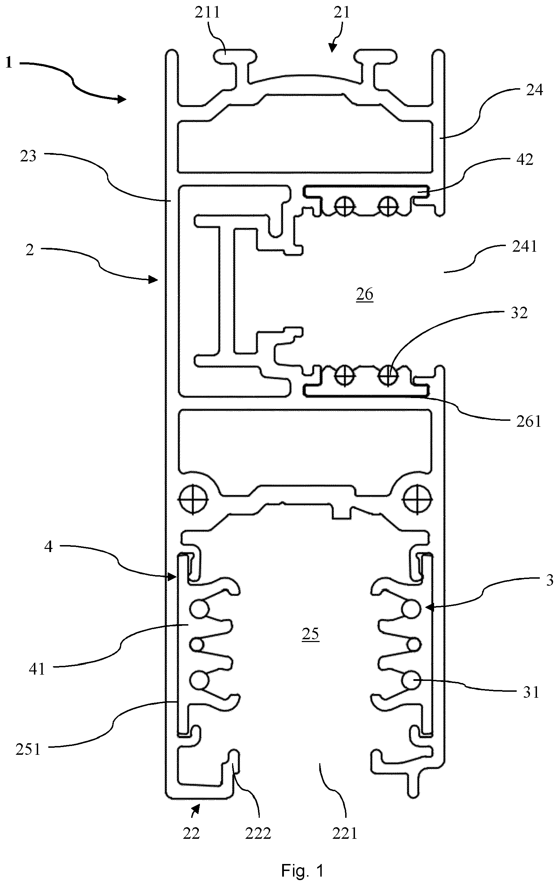

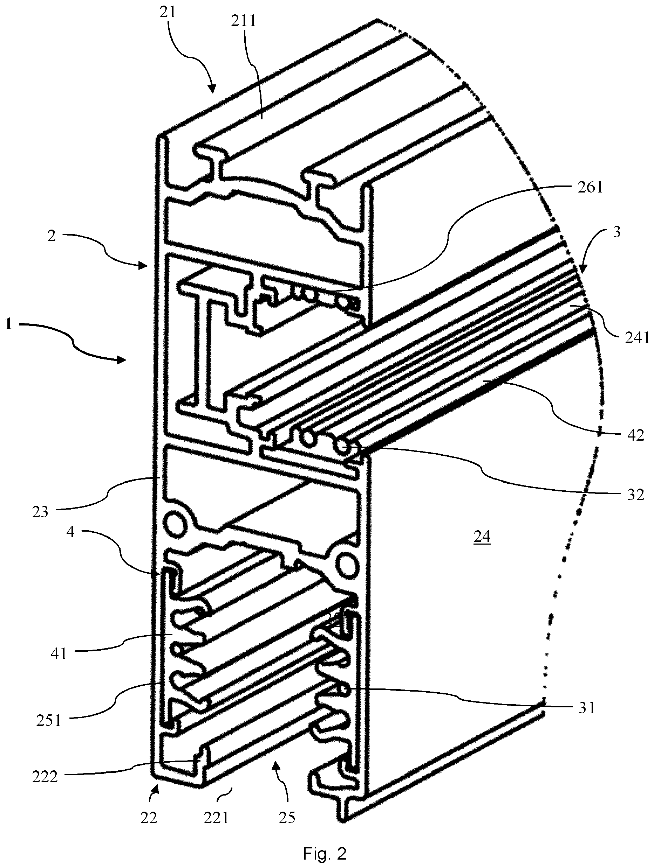

Fig. 1 zeigt ein erstes Ausführungsbeispiel einer erfindungsgemässen Deckenstromschiene 1. Die Deckenstromschiene 1 besteht aus einem mit Stromleitern 3 bestückten Profilkörper 2, wobei die Stromleiter 3 über Isolationsbahnen 4 am Profilkörper 2 befestigt sind. Wie in Fig. 2 gut ersichtlich ist, ist der Profilkörper 2 schienenartig als einstückiges Strangpressprofil aus Aluminium ausgestaltet. Er weist eine Oberseite 21, eine Unterseite 22, eine erste Längs- beziehungsweise Querseite 22 und eine zweite Längs- beziehungsweise Querseite 23 auf. Alle Seiten 21, 22, 23, 24 sind längsförmig und erstrecken sich entlang einer Längsachse des Profilkörpers 2.

Der Profilkörper 2 ist an seiner Oberseite 21 mit einer Montagekontur 211 als Deckenmontagestruktur ausgebildet. Über die Montagekontur 211 wird die Deckenstromschiene 1 an eine Raumdecke beziehungsweise an einer entsprechenden Einrichtung montiert. In seinem Innern umfasst der Profilkörper 2 einen unteren ersten Stromabgreifraum 25 und einen oberen zweiten Stromabgreifraum 26.

Der erste Stromabgreifraum 25 weist zwei sich seitlich gegenüberliegende, im Wesentlichen vertikal verlaufende Innenwandungen 251 auf, an denen jeweils eine erste Isolationsbahn 41 der Isolationsbahnen 4 aus Kunststoff angebracht ist. Die Unterseite 22 ist mit einer Öffnung 221 ausgestattet, durch welche hindurch der erste Stromabgreifraum 25 zugänglich ist. Wie in Fig. 2 ersichtlich ist, ist die Öffnung 221 in der Unterseite 22 schlitzförmig und erstreckt sich über die volle Länge des Profilkörpers 2.

Die ersten Isolationsbahnen 41 verlaufen entlang des Profilkörpers 2 und weisen jeweils drei Fassungen auf, in denen erste Stromleiter 31 der Stromleiter 3 angeordnet sind. Insbesondere sind die ersten Stromleiter 31 aus Kupfer und kabelförmig. Pro Fassung der Isolationsbahnen 41 ist ein erster Stromleiter 31 vorgesehen. Jeweils zwei gegenüberliegende erste Stromleiter 31 bilden ein Phasenpaar, sodass ein dreiphasiger Stromabgriff im ersten Stromabgreifraum 25 bereitgestellt ist. Insbesondere ist der erste Stromabgreifraum 25 so an ein Stromnetz koppelbar, dass eine Spannung von 220 Volt vorhanden ist.

Seitlich neben der Öffnung 221 der Unterseite 21 des Profilkörpers 2 ist eine Tragkontur 222 vorgesehen. In die Tragkontur 222 können Komponenten wie Stromverbraucher oder Stromadapter eingehängt werden. So kann die Deckenstromschiene 1 neben der Bereitstellung von Strom eine Tragfunktion übernehmen. Beispielsweise können Leuchten so direkt in die Deckenstromschiene 1 eingehängt werden und von dieser sowohl getragen als auch mit Strom versorgt werden.

Der zweite Stromabgreifraum 26 weist zwei sich gegenüberliegenden, im Wesentlichen horizontal verlaufende Innenwandungen 261 auf, an denen jeweils eine zweite Isolationsbahn 42 aus Kunststoff der Isolationsbahnen 4 angebracht ist. Die zweite Querseite 24 ist mit einer Öffnung 241 ausgestattet, durch welche hindurch der zweite Stromabgreifraum 26 zugänglich ist. Wie wiederum in Fig. 2 ersichtlich ist, ist die Öffnung 241 in der zweiten Querseite 24 schlitzförmig und erstreckt sich über die volle Länge des Profilkörpers 2.

Die zweiten Isolationsbahnen 42 verlaufen entlang des Profilkörpers 2 und weisen jeweils zwei Fassungen auf, in denen zweite Stromleiter 32 der Stromleiter 3 angeordnet sind. Insbesondere sind die zweiten Stromleiter 32 aus Kupfer und kabelförmig. Pro Fassung der zweiten Isolationsbahnen 42 ist ein zweiter Stromleiter 32 vorgesehen. Jeweils zwei gegenüberliegende zweite Stromleiter 32 bilden ein Phasenpaar, sodass ein zweiphasiger Stromabgriff im zweiten Stromabgreifraum 26 bereitgestellt ist. Insbesondere ist der zweite Stromabgreifraum 26 so an eine Stromquelle koppelbar, dass eine Niedervoltspannung von beispielsweise weniger als 60 Volt vorhanden ist.

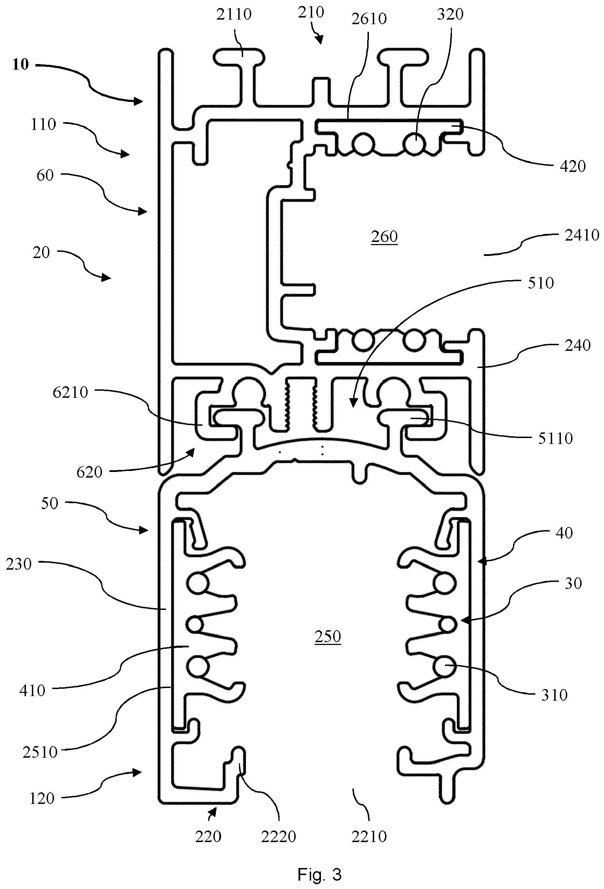

In Fig. 3 ist ein zweites Ausführungsbeispiel einer erfindungsgemässen Deckenstromschiene 10 gezeigt. Die Deckenstromschiene 10 umfasst ein Ausführungsbeispiel einer erfindungsgemässen Nachrüststromschiene 110 und eine herkömmliche Stromschiene 120. Die Nachrüststromschiene 110 weist ein als Strangpressprofil aus Aluminium gebildetes Ergänzungsprofilkörperteil 60 auf und die herkömmliche Stromschiene 120 ein als Strangpressprofil aus Aluminium gebildetes Basisprofilkörperteil 50. Das Basisprofilkörperteil 50 hat eine Oberseite 510, die mit einer Montagekontur 5110 als Deckenmontagestruktur ausgebildet ist. Das Ergänzungsprofilkörperteil 60 hat eine Unterseite 620, die mit einer Verbindungskontur 6210 als Verbindungsstruktur ausgebildet ist. Die Montagekontur 5110 und Verbindungskontur 6210 sind komplementär zueinander ausgestaltet und so miteinander verbunden, dass die Nachrüststromschiene 110 und die herkömmliche Stromschiene 120 zusammen eine Einheit bilden.

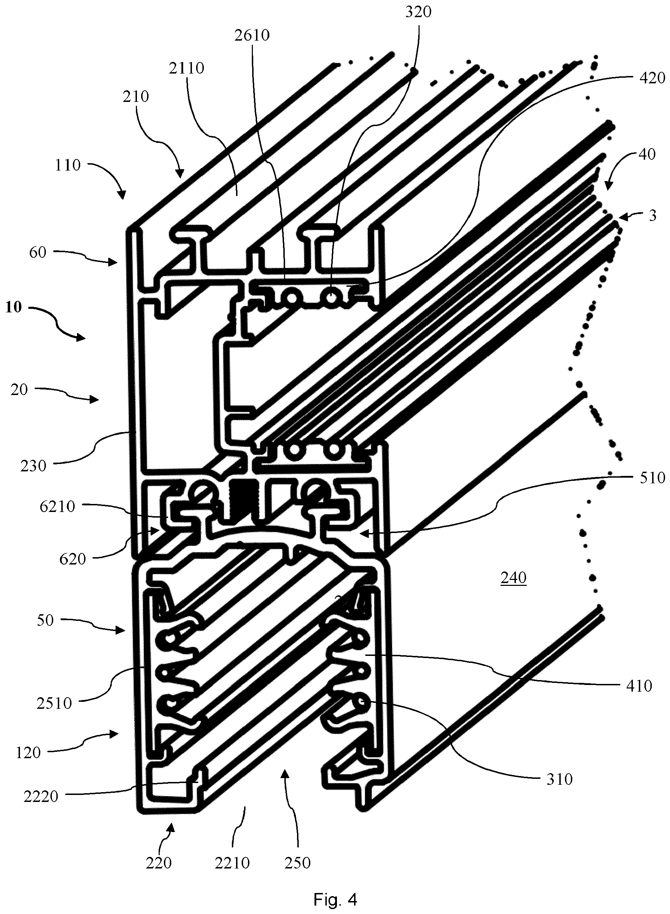

Insbesondere formen so das Basisprofilkörperteil 50 und das Ergänzungsprofilkörperteil 60 zusammen einen Profilkörper 20 der Deckenstromschiene 10, der mit Stromleitern 30 bestückt ist, wobei die Stromleiter 30 über Isolationsbahnen 40 am Profilkörper 20 befestigt sind. Wie in Fig. 4 ersichtlich ist, ist der Profilkörper 20 schienenartig ausgestaltet. Er weist eine am Ergänzungsprofilkörperteil 60 gebildete Oberseite 210 und eine am Basisprofilkörperteil 50 gebildete Unterseite 220 auf sowie jeweils an den Basis- und Ergänzungsprofilkörperteilen 50, 60 zusammen gebildet eine erste Längs- beziehungsweise Querseite 220 und eine zweite Längs- beziehungsweise Querseite 230. Alle Seiten 210, 220, 230, 240 sind längsförmig und erstrecken sich entlang einer Längsachse des Profilkörpers 20.

Der Profilkörper 20 ist an seiner Oberseite 210 mit einer Montagekontur 2110 als Deckenmontagestruktur ausgebildet. Die am Ergänzungsprofikörperteil 60 geformte Montagekontur 2110 ist identisch zur Montagekontur 5110 des Basisprofilkörperteils 50 ausgebildet. Über die Montagekontur 2110 wird die Deckenstromschiene 10 an eine Raumdecke beziehungsweise an einer entsprechenden Einrichtung montiert. Im Innern des Basisprofilkörperteils 50 umfasst der Profilkörper 20 einen unteren ersten Stromabgreifraum 250 und im Innern des Ergänzungsprofilkörperteils 60 einen oberen zweiten Stromabgreifraum 260.

Der erste Stromabgreifraum 250 weist zwei sich seitlich gegenüberliegende, im Wesentlichen vertikal verlaufende Innenwandungen 2510 auf, an denen jeweils eine erste Isolationsbahn 410 aus Kunststoff der Isolationsbahnen 40 angebracht ist. Die Unterseite 220 ist mit einer Öffnung 2210 ausgestattet, durch welche hindurch der erste Stromabgreifraum 250 zugänglich ist. Wie in Fig. 4 ersichtlich ist, ist die Öffnung 2210 in der Unterseite 220 schlitzförmig und erstreckt sich über die volle Länge des Profilkörpers 20.

Die ersten Isolationsbahnen 410 verlaufen entlang des Basisprofilkörperteils 50 des Profilkörpers 2 und weisen jeweils drei Fassungen auf, in denen kupferkabelartige erste Stromleiter 310 der Stromleiter 30 angeordnet sind. Pro Fassung der ersten Isolationsbahnen 410 ist einer der ersten Stromleiter 310 vorgesehen. Jeweils zwei gegenüberliegende erste Stromleiter 310 bilden ein Phasenpaar, sodass ein dreiphasiger Stromabgriff im ersten Stromabgreifraum 250 bereitgestellt ist. Insbesondere ist der erste Stromabgreifraum 250 so an ein Stromnetz koppelbar, dass eine Netzspannung von beispielsweise etwa 220 Volt abgreifbar ist.

Seitlich neben der Öffnung 2210 der Unterseite 210 des Profilkörpers 20 ist eine Tragkontur 2220 vorgesehen. In die Tragkontur 2220 können Komponenten wie Stromverbraucher oder Stromadapter eingehängt werden. So kann die Deckenstromschiene 10 neben der Bereitstellung von Strom eine Tragfunktion übernehmen. Beispielsweise können Leuchten so direkt in die Deckenstromschiene 10 eingehängt werden und von dieser sowohl getragen als auch mit Strom versorgt werden.

Der zweite Stromabgreifraum 260 weist zwei sich gegenüberliegende, im Wesentlichen horizontal verlaufende Innenwandungen 2610 auf, an denen jeweils eine zweite Isolationsbahn 420 der Isolationsbahnen 40 aus Kunststoff angebracht ist. Die zweite Querseite 240 ist im Bereich des Ergänzungsprofilkörperteils 60 mit einer Öffnung 2410 ausgestattet, durch welche hindurch der zweite Stromabgreifraum 260 zugänglich ist. Wie in Fig. 4 ersichtlich ist, ist die Öffnung 2410 in der zweiten Querseite 240 schlitzförmig und erstreckt sich über die volle Länge des Profilkörpers 20.

Die zweiten Isolationsbahnen 420 verlaufen entlang des Profilkörpers 20 und weisen jeweils zwei Fassungen auf, in denen zweite Stromleiter 320 der Stromleiter 30 angeordnet sind. Insbesondere sind die zweiten Stromleiter 320 aus Kupfer und kabelförmig. Pro Fassung der zweiten Isolationsbahnen 420 ist ein zweiter Stromleiter 320 vorgesehen. Jeweils zwei gegenüberliegende zweite Stromleiter 320 bilden ein Phasenpaar, sodass ein zweiphasiger Stromabgriff im zweiten Stromabgreifraum 260 bereitgestellt ist. Insbesondere ist der zweite Stromabgreifraum 26 so an eine Stromquelle koppelbar, dass eine Spannung von weniger als 60 Volt vorhanden ist.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Deckenstromschiene (1; 10) insbesondere zur Energieversorgung von an einer Raumdecke montierten Leuchten, umfassend:
einen längsförmigen Profilkörper (2; 20) mit einer Längsachse, einer Oberseite (21; 210), einer der Oberseite (21; 210) gegenüberliegenden Unterseite (22; 220), einer ersten Querseite (23; 230) und einer der ersten Querseite (23; 230) gegenüberliegende zweite Querseite (24; 240), wobei die Oberseite (21; 210), die Unterseite (22; 220), die erste Querseite (23; 230) und die zweite Querseite (24; 240) entlang der Längsachse verlaufen, und
sechs entlang der Längsachse des Profilkörpers (2; 20) verlaufende erste Stromleiter (31; 310),
wobei der Profilkörper (2; 20) eine an der Oberseite (21; 210) ausgebildete Deckenmontagestruktur (211; 2110) und einen ersten Stromabgreifraum (25; 250) aufweist,
wobei die sechs ersten Stromleiter (31; 310) im ersten Stromabgreifraum (25; 250) angeordnet sind, und
wobei die Oberseite (21; 210), die erste Querseite (23; 230) oder die zweite Querseite (24; 240) des Profilkörpers (2; 20) mit einer ersten Öffnung (221; 2210) ausgestattet ist, durch welche der erste Stromabgreifraum (25; 250) zugänglich ist,
**gekennzeichnet durch**
vier entlang der Längsachse des Profilkörpers (2; 20) verlaufende zweite Stromleiter (32; 320),
wobei der Profilkörper (2; 20) einen zweiten Stromabgreifraum (26; 260) aufweist,
wobei die vier zweiten Stromleiter (32; 320) im zweiten Stromabgreifraum (26; 260) des Profilkörpers (2; 20) angeordnet sind, und
wobei die Unterseite (22; 220), die erste Querseite (23; 230) oder die zweite Querseite (24; 240) des Profilkörpers (2; 20) mit einer zweiten Öffnung (241; 2410) ausgestattet ist, durch welche der zweite Stromabgreifraum (26; 260) zugänglich ist.

2. Deckenstromschiene (1; 10) nach Anspruch 1, wobei die erste Öffnung (221; 2210) und die zweite Öffnung (241; 2410) an verschiedenen der Unterseite (22; 220), der ersten Querseite (23; 230) und der zweiten Querseite (24; 240) des Profilkörpers (2; 20) ausgebildet sind.

3. Deckenstromschiene (1; 10) nach Anspruch 1 oder 2, wobei die Unterseite (22; 220) des Profilkörpers (2; 20) mit der ersten Öffnung (221; 2210) und eine der ersten Querseite (23; 230) und der zweiten Querseite (24; 240) des Profilkörpers (2; 20) mit der zweiten Öffnung (241; 2410) ausgestattet sind.

4. Deckenstromschiene (1; 10) nach einem der vorangehenden Ansprüche, wobei die sechs ersten Stromleiter (31; 310) in zwei Paaren jeweils an einander gegenüberliegenden Innenwandungen (251; 2510) des ersten Stromabgreifraums (25; 250) des Profilkörpers (2; 20) angeordnet sind.

5. Deckenstromschiene (1; 10) nach einem der vorangehenden Ansprüche, wobei die vier zweiten Stromleiter (32; 320) in zwei Paaren jeweils an einander gegenüberliegenden Innenwandungen (261; 2610) des zweiten Stromabgreifraums (26; 260) des Profilkörpers (2; 20) angeordnet sind.

6. Deckenstromschiene (1; 10) nach einem der vorangehenden Ansprüche, wobei die erste Öffnung (221; 2210) und die zweite Öffnung (241; 2410) jeweils schlitzartig geformt sind und sich im Wesentlichen über die ganze Länge des Profilkörpers (2; 20) erstrecken.

7. Deckenstromschiene (1; 10) nach einem der vorangehenden Ansprüche, wobei die Deckenmontagestruktur (211; 2110) als Kontur an der Oberseite (21; 210) des Profilkörpers (2; 20) ausgebildet ist.

8. Deckenstromschiene (1; 10) nach einem der vorangehenden Ansprüche, wobei die ersten Stromleiter (31; 310) und die zweiten Stromleiter (32; 320) über eine Isolationsstruktur (4; 40) stromtechnisch vom Profilkörper (2; 20) getrennt sind.

9. Deckenstromschiene (1; 10) nach einem der vorangehenden Ansprüche, die eine Nachrüststromschiene nach einem der Ansprüche 10 bis 14 umfasst, wobei der Profilkörper (2; 20) ein Basisprofilkörperteil (50) und das Ergänzungsprofilkörperteil (60) der Nachrüstschiene (110) umfasst,
wobei das Basisprofilkörperteil (50) eine der Längsachse entlang verlaufende und mit einer Deckenmontagestruktur (5110) ausgestattete Oberseite (510) und den ersten Stromabgreifraum (25; 250) aufweist, und
wobei die Verbindungsstruktur des Ergänzungsprofilkörperteils (60) der Nachrüstschiene mit der Deckenmontagestruktur (211; 2110) des Basisprofilkörperteils (50) verbunden ist, sodass
der Stromabgreifraum (260) des Ergänzungsprofilkörperteils (60) der Nachrüstschiene (110) den zweiten Stromabgreifraum (26; 260) des Profilkörpers (2; 20), die Oberseite (21; 210) des Ergänzungsprofilkörperteils (60) der Nachrüstschiene (110) die Oberseite (21; 210) des Profilkörpers (2; 20), die Unterseite (22; 220) des Basisprofilkörperteils (50) die Unterseite (22; 220) des Profilkörpers (2; 20), die Öffnung (2410) des Ergänzungsprofilkörperteils (60) der Nachrüstschiene (110) die zweite Öffnung (241; 2410) des Profilkörpers (2; 20) und die vier Stromleiter (320) der Nachrüstschiene (110) die vier zweiten Stromleiter (32; 320) bilden.

10. Nachrüststromschiene (110) für eine Deckenstromschiene (120), umfassend:
ein längsförmiges Ergänzungsprofilkörperteil (60) mit einer Längsachse, einer Oberseite (210), einer der Oberseite (210) gegenüberliegenden Unterseite (620), einer ersten Querseite (230) und einer der ersten Querseite (230) gegenüberliegende zweiten Querseite (240), wobei die Oberseite (210), die Unterseite (620), die erste Querseite (230) und die zweite Querseite (240) entlang der Längsachse verlaufen, und
vier entlang der Längsachse des Ergänzungsprofilkörperteils (60) verlaufende Stromleiter (320),
wobei das Ergänzungsprofilkörperteil (60) eine an der Oberseite (210) ausgebildete Deckenmontagestruktur (2110) und eine an der Unterseite (620) ausgebildete Verbindungsstruktur (6210) aufweist,
wobei die Deckenmontagestruktur (2110) und die Verbindungsstruktur (6210) des Ergänzungsprofilkörperteils (60) komplementär zueinander ausgestaltet sind,
wobei das Ergänzungsprofilkörperteil (60) einen Stromabgreifraum (260) aufweist,
wobei die vier Stromleiter (320) im Stromabgreifraum (260) des Ergänzungsprofilkörperteils (60) angeordnet sind, und
wobei die erste Querseite (230) oder die zweite Querseite (240) des Ergänzungsprofilkörperteils (60) mit einer Öffnung (2410) ausgestattet ist, durch welche der Stromabgreifraum (260) zugänglich ist.

11. Nachrüststromschiene (110) nach Anspruch 10, wobei die vier Stromleiter (320) in zwei Paaren jeweils an einander gegenüberliegenden Innenwandungen (2610) des Stromabgreifraums (260) des Ergänzungsprofilkörperteils (60) angeordnet sind.

12. Nachrüststromschiene (110) nach Anspruch 10 oder 11, wobei die Öffnung (2410) des Ergänzungsprofilkörperteils (60) schlitzartig geformt ist und sich im Wesentlichen über die ganze Länge des Ergänzungsprofilkörperteils (60) erstreckt.

13. Nachrüststromschiene (110) nach einem der Ansprüche 10 bis 12, wobei die Deckenmontagestruktur (211; 2110) als Kontur an der Oberseite (21; 210) des Ergänzungsprofilkörperteils (60) ausgebildet ist.

14. Nachrüststromschiene (110) nach einem der Ansprüche 10 bis 13, wobei die Stromleiter (320) über eine Isolationsstruktur (420) stromtechnisch vom Ergänzungsprofilkörperteil (60) getrennt sind.
